# FASCICULE DE BREVET EUROPEEN

(11) **EP 3 208 529 B1**
(45) Date de publication et mention de la délivrance du brevet: **27.03.2024**
(21) Numéro de dépôt: 17156449.5
(22) Date de dépôt: 16.02.2017
(51) Int. Cl.: F21S 41/143, F21V 5/04, F21Y 115/10, F21Y 105/10, F21Y 101/00, F21S 41/153, F21S 41/25, F21S 41/255, F21S 41/26, F21S 41/20, F21S 41/663

(54) **DISPOSITIF DE PROJECTION DE FAISCEAU LUMINEUX MUNI D'UNE MATRICE DE SOURCES DE LUMIERE, MODULE D'ECLAIRAGE ET PHARE DE VÉHICULE AUTOMOBILE MUNI D'UN TEL DISPOSITIF**
VORRICHTUNG ZUR PROJEKTION EINES LICHTSTRAHLS, DIE MIT EINER MATRIX VON LICHTQUELLEN AUSGESTATTET IST, LEUCHTMODUL UND KFZ-SCHEINWERFER MIT EINER SOLCHEN VORRICHTUNG
LIGHT BEAM PROJECTION DEVICE HAVING AN ARRAY OF LIGHT SOURCES, LIGHTING MODULE AND VEHICLE HEADLAMP PROVIDED WITH SUCH A DEVICE

(30) Priorité: 22.02.2016 FR 1651414
(43) Date de publication de la demande: 23.08.2017
(73) Titulaire: Valeo Vision, 93012 Bobigny Cedex (FR)
(72) Inventeur: COURCIER, Marine, 75011 Paris (FR)
(74) Mandataire: Valeo Visibility

(56) Documents cités:
- EP-A1- 2 357 399
- EP-A1- 2 752 615
- EP-A2- 1 213 178
- EP-A2- 2 784 376
- EP-A2- 2 789 900
- EP-A2- 2 827 049
- EP-A2- 2 910 847
- CN-A- 1 948 821
- DE-A1-102008 061 556
- DE-A1-102014 210 500
- US-A1- 2014 056 018

## Description

La présente invention concerne un dispositif de projection de faisceau lumineux, notamment pour véhicule automobile, et un projecteur de faisceau lumineux, de type feu de croisement ou feu de route, muni d'un tel dispositif de projection.

Les projecteurs de véhicule automobile sont munis d'un ou de plusieurs modules optiques agencés dans un boîtier fermé par une glace de manière à obtenir un ou plusieurs faisceaux lumineux à la sortie du projecteur. De façon simplifiée, un module optique du boîtier comprend notamment une source de lumière, par exemple une (ou plusieurs) diode(s) électroluminescente(s), qui émet des rayons lumineux, et un système optique comportant une ou plusieurs lentilles et, le cas échéant un réflecteur, pour orienter les rayons lumineux issus de la source lumineuse afin de former le faisceau lumineux de sortie du module optique.

On sait que certains projecteurs de véhicule automobile sont capables de faire varier l'orientation du faisceau lumineux en fonction des besoins du conducteur du véhicule. Ainsi, lorsque le véhicule effectue un virage, un système électronique à bord du véhicule commande une modification de l'orientation du faisceau lumineux afin de l'adapter au champ de vision du conducteur pendant la manoeuvre. Le projecteur déplace alors l'axe du faisceau lumineux dans le sens de rotation du véhicule afin d'éclairer la route plutôt que de projeter le faisceau tout droit.

D'autres projecteurs connus peuvent remplir les fonctions de feux de croisement et de feux de route, avec la même source de lumière. A cette fin, les projecteurs utilisent des moyens mécaniques qui déplacent un élément, appelée plieuse, pour couper une partie du faisceau. En outre, il existe aussi un éclairage de type feu de croisement conçu pour autoroute, dont le faisceau passe légèrement au-dessus de la coupure du faisceau du feu de croisement usuel afin d'améliorer la visibilité de la route lorsque le véhicule se déplace sur autoroute.

En outre, certaines technologies permettent de détecter des véhicules se déplaçant en sens inverse, et de projeter un faisceau lumineux avec une zone d'ombre. Autrement dit, le faisceau projeté a des trous de lumière en direction du véhicule détecté afin d'éviter d'éblouir le conducteur du véhicule croisé, tout en gardant un éclairage large de part et d'autre de ce véhicule. Lors de l'utilisation de cette quatrième fonction, le ou les trous de lumière suivent le déplacement du véhicule croisé ; ils se déplacent donc à l'intérieur du faisceau projeté.

Ainsi, on souhaite pouvoir contrôler les rayons lumineux émis par la source pour modifier les dimensions du faisceau lumineux qui sort du projecteur et parvenir à effectuer toutes les fonctions mentionnées précédem ment.

Pour y parvenir, le document DE 102008 061 556 décrit un dispositif d'éclairage muni d'une matrice de diodes électroluminescentes, chaque diode étant adressable individuellement. Les diodes sont disposées les unes à côté des autres, chaque diode émettant une composante du faisceau lumineux sortant du projecteur. Ce dispositif permet ainsi de contrôler les dimensions du faisceau lumineux en activant une partie des diodes électroluminescentes correspondant à la taille du faisceau souhaité.

Cependant, les matrices de diodes actuelles ne permettent pas d'obtenir un faisceau lumineux homogène. En effet, les diodes étant espacées d'une distance minimale, il apparaît un intervalle entre les différents faisceaux lumineux composant le faisceau, intervalle qui correspond à l'espacement des diodes.

Les documents EP 2 789 900 A2 et EP 2 784 376 A2 illustrent également les connaissances de l'homme du métier.

L'invention vise donc à obtenir un module optique configuré pour projeter un faisceau lumineux dont les dimensions et l'orientation sont modifiables et dont la distribution de lumière est bien homogène.

Pour cela, l'invention concerne un module optique de projection de faisceau lumineux, notamment d'éclairage automobile, comprenant
un dispositif optique de projection de faisceau lumineux comprenant en amont selon le sens de propagation des rayons lumineux, une matrice de sources primaires de lumière aptes à émettre des rayons lumineux, et en aval un système optique primaire muni d'une pluralité d'optiques convergentes configurées pour former des images virtuelles des sources primaires de lumière, les images virtuelles étant formées en amont de la matrice de sources primaires de lumière, de sorte que les dimensions des images virtuelles soient plus grandes que les dimensions des sources primaires de lumière
et des moyens de projection, formés par une lentille de projection ou un réflecteur ou par l'association de plusieurs lentilles ou de plusieurs réflecteurs, ou d'une combinaison d'une ou plusieurs lentilles et/ou d'un ou plusieurs réflecteurs, disposés en aval du système optique primaire dans le sens de projection du faisceau lumineux.

Le module optique est remarquable en ce que les moyens de projection sont aptes à projeter un faisceau lumineux à partir des images virtuelles servant de sources de lumière aux moyens de projection qui sont focalisés sur lesdites images virtuelles,
et en ce qu'une optique convergente est disposée en aval de chaque source primaire de lumière, chaque optique convergente comprenant un micro-dioptre d'entrée avec au moins une portion convexe, le système optique primaire comprenant un dioptre de sortie unique pour tous les micro-dioptres d'entrée, configuré pour corriger les aberrations optiques, et ayant une forme sensiblement sphérique.

De plus, la formation d'images virtuelles permet d'obtenir une meilleure compacité selon l'axe optique du dispositif par rapport à un dispositif effectuant une image réelle des sources primaires de lumière, en aval des sources primaires de lumière.

Ainsi, les images virtuelles étant formées en amont de la matrice de sources lumineuses, elles sont agrandies et minimisent donc l'intervalle entre les faisceaux produits par les différentes sources. Dans un mode de réalisation préféré, le système optique primaire est configuré de sorte que les images virtuelles soient juxtaposées ou sensiblement juxtaposées, réalisant ainsi une bonne homogénéité de la distribution de lumière.

Selon différents modes de réalisation de l'invention, qui pourront être pris ensemble ou séparément :
- les micro-dioptres d'entrée convergents présentent une surface plane,
- le système optique primaire est agencé de sorte que les images virtuelles des sources primaires de lumière sont sensiblement adjacentes pour former une distribution de lumière homogène,
- le système optique primaire est configuré pour former les images virtuelles dans un plan,
- le dioptre de sortie a une forme allongée, avec une définition bifocale ;
- le système optique primaire est fait d'une seule matière, c'est-à-dire que ses différents éléments constitutifs sont venus de matière et d'un seul tenant ;
- les sources primaires de lumière sont des diodes électroluminescentes.

Dans le cadre de la présente invention, on désigne par micro-dioptre des dioptres dont les dimensions externes sont inférieures ou égales à 5 fois les dimensions de la source primaire de lumière associée. Elles sont en général dans un ordre de grandeur millimétrique. Ainsi par exemple, pour une diode électroluminescente (LED) individuelle dont la surface émettrice est de 1 mm de côté, les dimensions du dioptre associé seront inscrites dans un carré de 5 mm de côté maximum. Si la source primaire est constituée par une sous-matrice de LED, ce sont les dimensions de la sous-matrice qui seront considérées.

En outre, on entend dans la présente demande par matrice de sources primaires un ensemble de sources primaires agencé selon au moins deux colonnes par au moins deux lignes, de préférence au moins dix colonnes par au moins trois lignes.

On appelle alors sous-matrice un ensemble composé d'au moins deux sources primaires, disposées en ligne ou en colonne. Par exemple, une sous-matrice peut comprendre une ligne et deux colonnes de diodes. De préférence, elle peut comprendre au moins deux lignes et au moins deux colonnes de diodes. Avantageusement, la matrice de sources mise en oeuvre peut être constituée par des sous-matrices de plusieurs tailles différentes.

De plus, si les sources primaires sont toutes de même dimension, on pourra prévoir que tous les dioptres ont la même dimension. Avantageusement toutefois, on pourra également prévoir que les dioptres associés aux sources en bordure de la matrice, notamment aux extrémités latérales, soient de dimensions plus grande que les autres afin de former une image virtuelle allongée latéralement et verticalement qui donnera un motif lumineux projeté de plus grande taille que les autres, notamment pour produire un éclairement des bas-côtés de la route.

Selon l'invention, les moyens de projection sont aptes à projeter un faisceau lumineux à partir des images virtuelles servant de sources de lumière aux moyens de projection qui sont focalisés sur lesdites images virtuelles.

Cette caractéristique de l'invention est particulièrement intéressante et avantageuse. En effet, la focalisation des moyens de projection sur les images virtuelles, notamment sur le plan qui contient lesdites images virtuelles, rend le module optique de projection peu sensible aux défauts de réalisation du système optique primaire : si les moyens de projection sont focalisés sur la surface des dioptres, c'est cette surface qui est imagée et donc tous ses défauts de réalisation qui sont rendus visibles, ce qui peut générer des défauts d'homogénéité ou de chromatisme dans le faisceau lumineux projeté. De plus, cela permet d'utiliser une sous-matrice de sources de lumière en association avec l'optique primaire, chaque source étant individuellement imagée.

L'invention se rapporte encore à un projecteur de véhicule automobile muni d'un tel module optique.

L'invention sera mieux comprise à la lumière de la description suivante qui n'est donnée qu'à titre indicatif et qui n'a pas pour but de la limiter, accompagnée des dessins joints :
- la figure 1 illustrant de façon schématique, une vue en perspective d'un premier mode de réalisation d'un module de projection selon l'invention,
- la figure 2 illustrant de façon schématique, une vue en perspective agrandie d'une partie du module de projection de la figure 1,
- la figure 3 illustrant de façon schématique, une vue en perspective de la formation d'une image virtuelle sur la partie du module de projection de la figure 2,
- la figure 4 illustrant de façon schématique, une vue de côté du premier mode de réalisation d'un module de projection selon l'invention,
- la figure 5 illustrant de façon schématique, une vue de côté d'une première variante d'un deuxième mode de réalisation d'un module de projection selon l'invention,
- la figure 6 illustrant de façon schématique, une vue de côté d'une deuxième variante du deuxième mode de réalisation d'un module de projection non couvert par l'invention,
- la figure 7 illustrant de façon schématique, une vue de côté d'une troisième variante du deuxième mode de réalisation d'un module de projection selon l'invention,
- la figure 8 illustrant de façon schématique, une vue de côté d'une quatrième variante du deuxième mode de réalisation d'un module de projection selon l'invention,
- la figure 9 illustrant de façon schématique, une vue de côté d'une cinquième variante du deuxième mode de réalisation d'un module de projection selon l'invention,
- la figure 10 illustrant de façon schématique, une vue de côté d'une variante de réalisation du premier mode de réalisation non couverte par l'invention,
- la figure 11 illustrant de façon schématique, une vue de face d'un premier type de matrice de sources lumineuses,
- la figure 12 illustrant de façon schématique, une vue de face d'un deuxième type de matrice de sources lumineuses,
- la figure 13 illustrant de façon schématique, une vue de face d'un troisième type de matrice de sources lumineuses,
- la figure 14 illustrant de façon schématique, une vue de face d'un quatrième type de matrice de sources lumineuses.

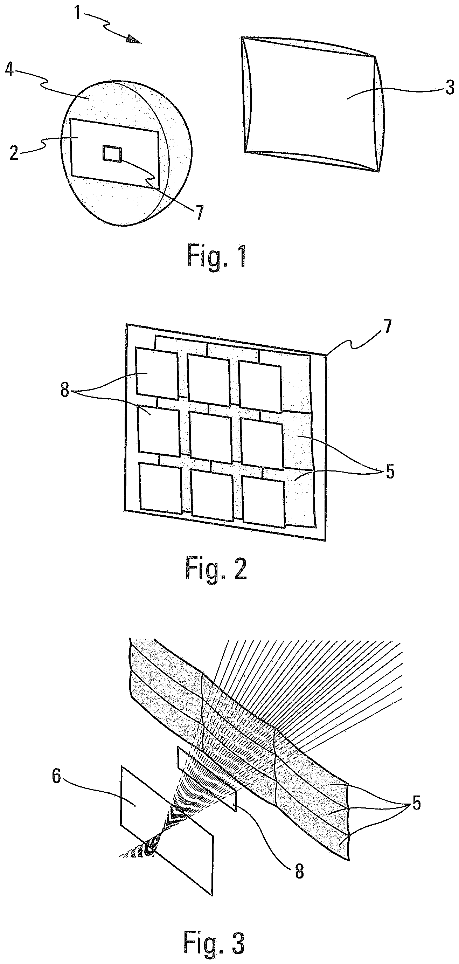

Les figures 1 à 4 montrent un premier mode de réalisation d'un module optique 1 de projection de faisceau lumineux, notamment pour véhicule automobile. Le module 1 comprend d'amont en aval dans le sens de propagation des rayons lumineux selon l'axe optique 15, une matrice 2 de sources primaires 8 de lumière aptes à émettre des rayons lumineux, un système optique primaire 4 qui transmet les rayons lumineux, et des moyens de projection configurés pour projeter un faisceau lumineux à partir des rayons lumineux incidents transmis par le système optique primaire 4.

Sur les figures les moyens de projection prennent la forme d'une lentille de projection 3 unique. Les moyens de projection pourraient néanmoins être formés de l'association de plusieurs lentilles, de plusieurs réflecteurs, ou encore d'une combinaison d'une ou plusieurs lentilles et/ou d'un ou plusieurs réflecteurs.

Les sources primaires 8 de lumière sont par exemple des diodes électroluminescentes formant un réseau sur la matrice 2, comme représenté sur la figure 2. Ces matrices 2 de diodes électroluminescentes sont connues et accessibles dans le commerce.

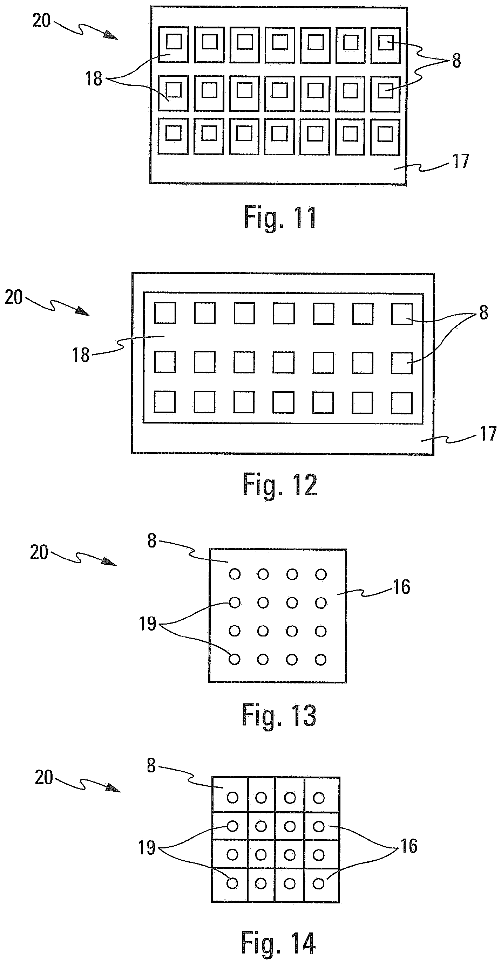

La figure 11 montre une matrice 20 multi puces de sources de lumière 8, de type diode électroluminescente, chaque source 8 étant adressable individuellement. Chaque source 8 est fabriquée séparément sur une puce indépendante, qui est montée sur un élément de maintien 18, luimême assemblé aux autres sources sur un support 17. La figure 12 représente un deuxième type de matrice 20 multi puces dans laquelle les diodes électroluminescentes sont préassemblées les unes aux autres sur un élément de maintien 18 commun disposé sur un support 17.

Les figures 13 et 14 illustrent des matrices mono-puce 20, dans lesquelles les sources de lumière 8 ont une électrode en commun. Une diode a deux électrodes 16,19 en contact, une première électrode 19 ponctuelle et une deuxième électrode 16 surfacique. Sur la figure 13, les sources 8 sont adressables individuellement en activant la première électrode 19, la deuxième électrode étant la même pour toute les sources 8 de la puce. En revanche, les sources de lumière 8 de la figure 14 ont une deuxième électrode 19 divisée en portion de manière à avoir une deuxième électrode 19 indépendante pour chaque source 8, les premières électrodes 16 étant activables simultanément.

Selon une variante de réalisation particulière, les sous-matrices 20 de lumière peuvent être basées sur une source lumineuse à semi conducteur comprenant une pluralité d'unités électroluminescentes de dimensions submillimétriques, les unités étant réparties dans différentes zones lumineuses activables sélectivement. En particulier, chacune des unités lumineuses électroluminescentes de dimensions submillimétriques prend la forme d'un bâtonnet. En outre, les bâtonnets sont sur un même substrat, qui de préférence comprend du silicium.

Sur la figure 1 à 4, le système optique primaire 4 a pour fonction de transmettre des rayons lumineux des diodes de sorte que, combiné aux moyens de projection, ici sous la forme d'une lentille de projection 3, le faisceau projeté en dehors du module, par exemple sur la route, soit homogène. A cette fin, le système optique primaire 4 est muni d'une pluralité d'optiques convergentes, qui sont de préférence des micro-dioptres d'entrée 5 convergents. Ici, les micro-dioptres d'entrée 5 présentent une surface convexe, c'est-à-dire qu'ils sont bombés vers l'extérieur, en direction des sources 8. La surface pourrait toutefois être plane, plan-convexe ou concaveconvexe. Un micro-dioptre d'entrée 5 est avantageusement disposé en aval de chaque source de lumière 8, c'est-à-dire de chaque diode électroluminescente ou sous-matrice de diodes de la matrice 2, comme montré sur la figure 2. Les micro-dioptres d'entrée 5 forment des images virtuelles 6 des sources primaires 8 de lumière, comme cela est montré sur la figure 3.

Les images virtuelles 6 sont formées en amont de la matrice 2 de sources primaires 8, et servent ainsi de nouvelles sources de lumière pour la lentille de projection. Les images virtuelles 6 obtenues sont agrandies et de préférence sensiblement adjacentes. Autrement dit, elles ne sont pas séparées par un espace significatif. En outre, les images virtuelles mitoyennes peuvent présenter un léger recouvrement entre elles, qui se traduira par un chevauchement de leurs projections respectives par les moyens de projection mesuré sur un écran placé à 25 m du dispositif qui sera de préférence inférieur à 1°. De fait, on cherchera dans la conception du système optique primaire à ce que les images virtuelles soient juxtaposées d'un point de vue paraxial, avec une marge de tolérancement pour assurer la robustesse vis-vis de la précision de positionnement des sources lumineuses et vis-à-vis des défauts de réalisation des surfaces des micro-dioptres : les bords de chaque image virtuelle seront flous, de sorte à obtenir ce léger recouvrement qui assurera une bonne homogénéité du faisceau lumineux généré. Le système optique primaire 4 permet donc de former des images virtuelles 6 des sources primaires 8 de lumière afin d'obtenir une distribution homogène du faisceau, c'est-à-dire que les composantes du faisceau lumineux sont correctement ajustées les unes par rapport aux autres, sans bandes sombres et/ou brillantes (en surintensité) entre elles qui nuiraient au confort de conduite.

En outre, les images virtuelles 6 sont plus éloignées de la lentille de projection 3 par rapport à la matrice réelle des sources lumineuses, ce qui permet de garder un module optique compact.

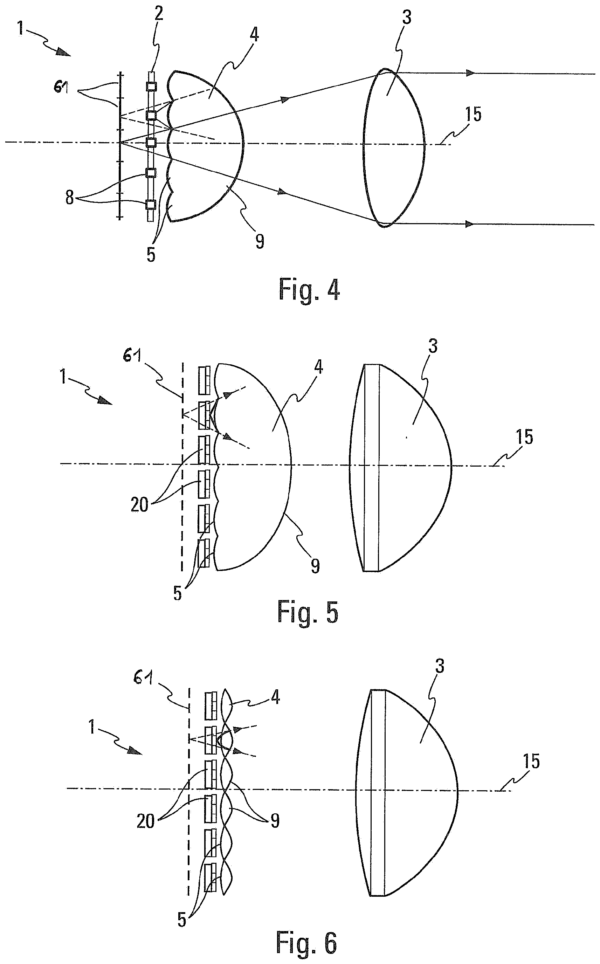

Le système optique primaire 4 est avantageusement configuré pour former des images virtuelles 6 dans un plan 61, les dimensions des images virtuelles 6 étant plus grandes que les dimensions des sources primaires 8 de lumière. Comme le montre la figure 4, l'agrandissement de la taille des images virtuelles 6 permet une juxtaposition des images virtuelles 6 dans le plan 61 de sorte à être adjacentes les unes aux autres. A cette fin, la courbure convexe et le matériau composant le micro-dioptre sont adaptés aux dimensions de la matrice 2 de sources primaires 8, ainsi que le positionnement du système optique primaire 4 par rapport à la matrice 2, de sorte que les images virtuelles 6 soient correctement juxtaposées. Avantageusement, les sources primaires 8 de lumière sont le plus proche possible du système optique primaire 4, par exemple à une distance de 0,2 à 2 mm, et de préférence de 0,3 à 0,5 mm.

Pour plus de clarté, les images virtuelles 6 n'ont pas été représentées sur les figures 4 à 10. Seul le plan 61 dans lequel ces images virtuelles 6 sont situées a été représenté.

Le module optique 1 de la figure 4 comprend la matrice 2 de sources primaires 8 de lumière, le système optique primaire 4 muni des micro-dioptres d'entrée 5 et des moyens de projection formés par la lentille de projection 3. Le système optique primaire 4 comprend en outre un dioptre de sortie 9 unique pour tous les micro-dioptres d'entrée 5.

Le dioptre de sortie 9 apporte une correction optique du faisceau transmis à la lentille de projection 3. La correction sert notamment à améliorer l'efficacité optique du dispositif et à corriger les aberrations optiques du système 4. A cette fin, le dioptre de sortie 9 a une forme de dôme sensiblement sphérique. Cette forme dévie peu la direction des rayons lumineux du faisceau provenant d'une source disposée sur l'axe optique 15, et qui traversent le dioptre de sortie 9.

Dans l'exemple de réalisation représenté, le dioptre de sortie 9 a une forme de dôme sensiblement sphérique.

Selon une variante non représentée, il aura une forme allongée, de type cylindrique, avec une définition bifocale. En vue frontale, le dioptre de sortie 9 est plus large que haut. Selon un exemple préféré de réalisation de cette variante, le dioptre de sortie 9 présente en section horizontale - donc dans le sens de sa largeur - un grand rayon de courbure, avec une flèche de moins de 5 mm. La surface en section horizontale peut être convexe ou concave, c'est-à-dire que le dioptre de sortie 9 est respectivement convergent ou divergent, cette dernière alternative étant particulièrement intéressante pour réduire l'encombrement du dispositif optique. Toujours selon cet exemple préféré de réalisation, en section verticale - dans le sens de sa hauteur donc - la surface du dioptre de sortie 9 est asphérique, avec une approximation sphérique du premier ordre qui a un rayon compris entre 5 et 10 mm, bornes incluses.

Dans ce premier mode de réalisation, le système optique primaire 4 est fait d'une seule matière. Autrement dit, les micro-dioptres d'entrée 5 et le dioptre de sortie 9 forment les faces d'entrée et de sortie d'un même élément, le système optique primaire 4, qui s'apparente à une lentille complexe.

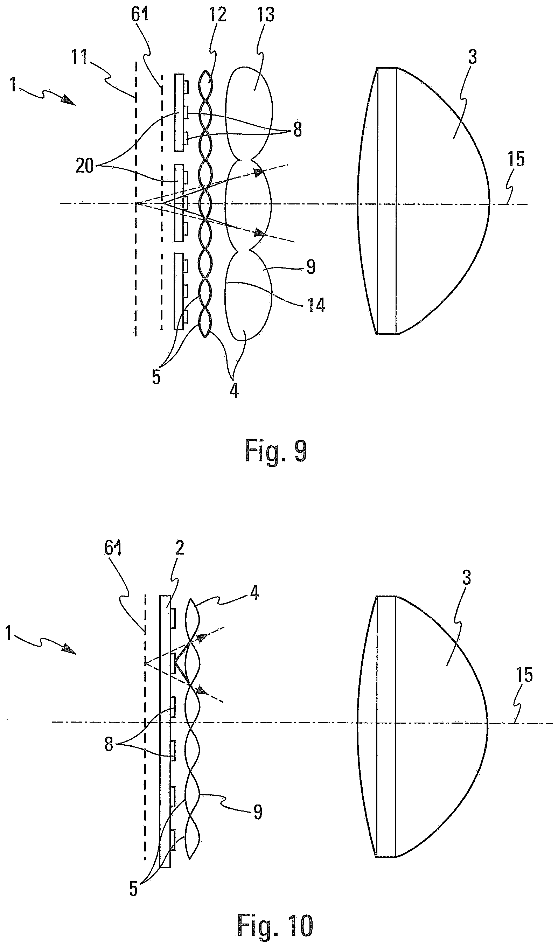

Dans une variante du premier mode de réalisation non couverte par l'invention, représentée sur la figure 10, le système optique primaire 4 comprend un micro-dioptre de sortie 9 pour chaque micro-dioptre d'entrée 5. Le système optique primaire 4 forme alors un ensemble de microlentilles bi convexes, chaque microlentille étant disposée devant une source primaire de lumière. La microlentille ne permet cependant pas de corriger le faisceau global transmis, comme un système optique primaire 4 muni d'un dioptre de sortie 9 unique. Ces microlentilles sont semblables à celles de la deuxième variante du deuxième mode de réalisation représentée sur la figure 6, décrites ci-après. Elles ont l'avantage d'apporter une meilleure homogénéité des images virtuelles et moins de déformation des images.

Dans un second mode de réalisation, représenté sur les figures 5 à 8, le dispositif comporte plusieurs sous-matrices 20 de sources primaires 8 de lumière, à la place de la matrice 2 du mode de réalisation précédent. Les sous-matrices 20 de diodes électroluminescentes sont plus facilement manipulables et moins coûteuses que des matrices de grande taille. Ainsi, il est plus économique d'obtenir une matrice de grande taille en associant plusieurs sous-matrices 20. Une telle composition peut contenir de 100 à 600 diodes électroluminescentes.

Selon une variante de réalisation particulière, les sous-matrices 20 de lumière peuvent être basées sur une source lumineuse à semi conducteur comprenant une pluralité d'unités électroluminescentes de dimensions submillimétriques, les unités étant réparties dans différentes zones lumineuses activables sélectivement. En particulier, chacune des unités lumineuses électroluminescentes de dimensions submillimétriques prend la forme d'un bâtonnet. En outre, les bâtonnets sont sur un même substrat, qui de préférence comprend du silicium.

Le système optique primaire 4 associe les rayons lumineux des sous-matrices 20 afin de former un faisceau unique ayant les mêmes propriétés que dans le mode de réalisation muni d'une seule matrice. L'invention permet donc non seulement d'utiliser des composants standards présents sur le marché, mais évite en plus les problèmes de dilatation thermique se produisant sur les composants de grande taille.

Les faisceaux formés par les différentes sous-matrices 20 se complètent, avec avantageusement une légère superposition des faisceaux qui n'excède pas 1° d'angle d'ouverture de chaque faisceau. On évite de superposer les différents faisceaux avec un angle plus grand afin de conserver une discrétisation des composantes et garder un faisceau projeté dont les contours sont bien définis.

La figure 5 montre une première variante de réalisation d'un module optique 1 de projection comprenant en amont plusieurs sous-matrices 20 et en aval, des moyens de projection 3 tels qu'une lentille de projection. Le dispositif optique comprend, également entre les sous-matrices 20 et la lentille de projection 3, un système optique primaire 4 muni d'une pluralité de micro-dioptres d'entrée 5 convergents, ici présentant une surface convexe, et configurés pour former des images virtuelles 6 dans un même plan 61. Les micro-dioptres d'entrée 5 sont agencés en aval des sous-matrices 20, un micro-dioptre d'entrée 5 correspondant à une sous-matrice 20 de sources primaires 8 de lumière.

Les images virtuelles 6 des sources de lumière sont formées dans un même plan 61, en amont des sous-matrices 20, les images virtuelles 6 servant de sources de lumière pour la lentille de projection 3.

Comme dans le mode de réalisation de la figure 4, le système optique primaire 4 de la figure 5 a un dioptre de sortie 9 unique, formé pour apporter une correction optique du faisceau transmis à la lentille de projection 3, le dioptre de sortie 9 ayant également une forme de dôme convexe. De plus, le système optique primaire 4 est aussi un élément optique fait d'une seule matière.

Dans une deuxième variante du deuxième mode de réalisation, non couverte par l'invention, représentée sur la figure 6, le système optique primaire 4 comprend un micro-dioptre de sortie 9 pour chaque micro-dioptre d'entrée 5. Ici, le dioptre de sortie 9 n'a pas pour fonction de corriger le faisceau transmis. Le système optique primaire 4 forme alors un ensemble de microlentilles bi convexes. Dans ce mode de réalisation, le module comprend des sous-matrices 20 de sources primaires 8 de lumière, chaque microlentille bi convexe étant disposée en aval d'une sous-matrice 20.

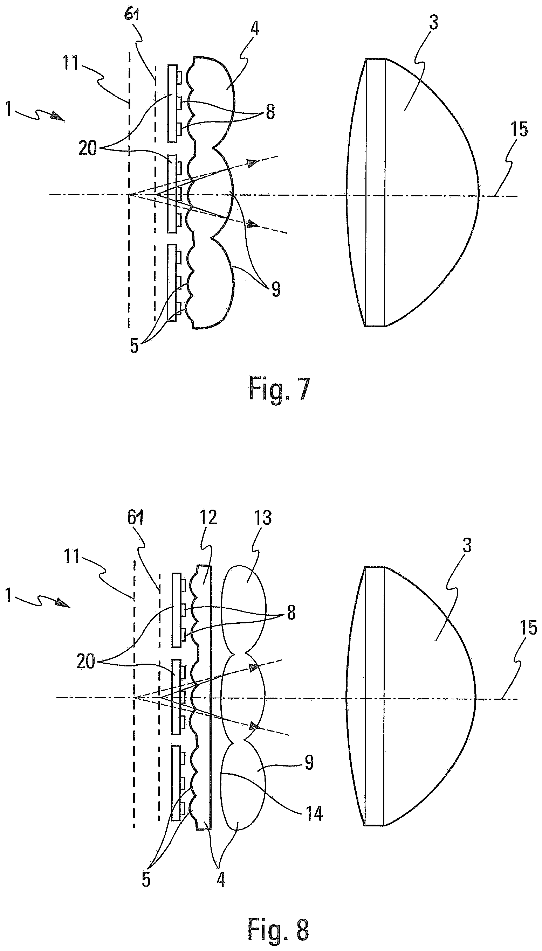

La figure 7 montre une troisième variante du deuxième mode de réalisation du module optique 1 selon l'invention, et qui comprend un système optique primaire 4 muni de micro-dioptres d'entrée 5, agencé en aval des sous-matrices 20 de sources primaires 8 de lumière. Un micro-dioptre d'entrée 5 correspond à une source primaire 8 de lumière de chaque sous-matrice 20. Dans cette variante de réalisation, le système optique primaire 4 comprend un dioptre de sortie 9 pour chaque sous-matrice 20. Le dioptre de sortie 9 et les micro-dioptres d'entrée 5 de chaque lentille sont en continuité de matière, de sorte qu'ils forment une lentille complexe. Les lentilles complexes du système optique primaire 4 peuvent en outre être reliées les unes aux autres. Ainsi, le dioptre de sortie 9 génère une image virtuelle agrandie de la sous-matrice, afin que les faisceaux de chaque sous-matrices 20 soient ajustés les uns par rapport aux autres.

En outre, les dioptres de sortie 9 et les micro-dioptres d'entrée 5 font partie d'un système optique primaire 4 venu de matière. Autrement dit, le système optique primaire 4 ne comprend qu'un seul élément.

La figure 8 décrit une quatrième variante du deuxième mode de réalisation, qui est semblable à la troisième variante de la figure 7, la différence résidant dans le système optique primaire 4 qui est séparé en deux éléments 12, 13. Le premier élément 12 comporte les micro-dioptres d'entrée 5 et une face de sortie unique sensiblement plane pour tous les micro-dioptres d'entrée 5. Le second élément 13 est muni d'une face d'entrée présentant un dioptre convexe 14 pour chaque sous-matrice 20, et des dioptres de sortie 9 également pour chaque sous-matrice 20.

La cinquième variante de la figure 9 est sensiblement la même que la quatrième variante. La forme du premier élément 12 diffère en ce qu'elle comporte un ensemble de microlentilles bi convexes, de façon analogue à la deuxième variante de la figure 6.

Les systèmes optiques 4 des troisième, quatrième, et cinquième variantes, conviennent particulièrement bien pour les sous-matrices 20 dont les sources primaires 8 de lumières sont éloignées les unes des autres. Un éloignement de plus de 5% de la largeur de la source primaire 8 de lumière peut être considéré comme un éloignement important. Ainsi, les micro-dioptres d'entrée 5 placés en aval de chaque source primaire 8 de lumière permettent d'homogénéiser, à l'intérieur d'une sous-matrice, selon le processus décrit précédemment, la lumière fournie par les sources primaires 8. Les dioptres de sortie 9 placés en aval de chaque sous-matrice 20 ont pour fonction de faire une seconde image virtuelle située dans un plan 11, homogène entre les sous-matrices.

Lorsqu'on a un dioptre d'entrée 14 dédié à chaque sous-matrice (cas des figures 8 et 9), l'association du dioptre de sortie 9 et du dioptre d'entrée 14 crée les images virtuelles entre sous-matrices. Avantageusement, on génère ainsi moins de déformations géométriques de l'image. Cette homogénéisation entre les sous-matrices 20 est surtout utile dans la mesure où la distance entre les sous-matrices est plus grande que celle séparant les sources de lumières 8.

## Revendications

1. Module optique de projection de faisceau lumineux, notamment d'éclairage automobile comprenant
un dispositif optique de projection de faisceau lumineux comprenant en amont selon le sens de propagation des rayons lumineux, une matrice (2) de sources primaires (8) de lumière aptes à émettre des rayons lumineux, et en aval un système optique primaire (4) muni d'une pluralité d'optiques convergentes configurées pour former des images virtuelles (6) des sources primaires (8) de lumière, les images virtuelles (6) étant formées en amont de la matrice (2) de sources primaires (8), de sorte que les dimensions des images virtuelles (6) soient plus grandes que les dimensions des sources primaires (8) de lumière
et des moyens de projection, formés par une lentille de projection (3) ou un réflecteur ou par l'association de plusieurs lentilles ou de plusieurs réflecteurs, ou d'une combinaison d'une ou plusieurs lentilles et/ou d'un ou plusieurs réflecteurs, disposés en aval du système optique primaire (4) dans le sens de projection du faisceau lumineux,
**caractérisé en ce que** les moyens de projection sont aptes à projeter un faisceau lumineux à partir des images virtuelles (6) servant de sources de lumière aux moyens de projection qui sont focalisés sur lesdites images virtuelles.
et **en ce qu'**une optique convergente est disposée en aval de chaque source primaire (8) de lumière, chaque optique convergente comprenant un micro-dioptre d'entrée (5) avec au moins une portion convexe, le système optique primaire (4) comprenant un dioptre de sortie unique (9) pour tous les micro-dioptres d'entrée (5), configuré pour corriger les aberrations optiques, et ayant une forme sensiblement sphérique.

2. Module optique de projection de faisceau lumineux selon la revendication 1, **caractérisé en ce que** le système optique primaire (4) est agencé de sorte que les images virtuelles (6) des sources primaires (8) de lumière sont sensiblement adjacentes pour former une distribution de lumière homogène.

3. Module optique de projection de faisceau lumineux selon l'une quelconque des revendications précédentes, **caractérisé en ce que** le système optique primaire (4) est configuré pour former les images virtuelles (6) dans un plan.

4. Module optique de projection de faisceau lumineux selon l'une quelconque des revendications précédentes, **caractérisé en ce que** le système optique primaire (4) est fait d'une seule matière.

5. Module optique de projection de faisceau lumineux selon l'une quelconque des revendications précédentes, **caractérisé en ce que** les sources primaires (8) de lumière sont des diodes électroluminescentes.

6. Projecteur de véhicule automobile comprenant un module optique (1) de projection de faisceau lumineux, selon l'une quelconque des revendications précédentes.

## Patentansprüche

1. Optisches Modul zur Projektion eines Lichtbündels, insbesondere einer Kraftfahrzeugbeleuchtung, umfassend
eine optische Vorrichtung zur Projektion eines Lichtbündels, umfassend vorgelagert entlang der Ausbreitungsrichtung der Lichtstrahlen eine Matrix (2) aus primären Lichtquellen (8), die geeignet sind, Lichtstrahlen auszusenden, und nachgelagert ein primäres optisches System (4), das mit einer Mehrzahl von konvergenten Optiken versehen ist, die dazu ausgestaltet sind, virtuelle Bilder (6) der primären Lichtquellen (8) zu bilden, wobei die virtuellen Bilder (6) der Matrix (2) aus primären Quellen (8) vorgelagert gebildet werden, so dass die Abmessungen der virtuellen Bilder (6) größer als die Abmessungen der primären Lichtquellen (8) sind
und Projektionsmittel, die durch eine Projektionslinse (3) oder einen Reflektor oder durch die Verbindung von mehreren Linsen oder von mehreren Reflektoren oder aus einer Kombination einer oder mehrerer Linsen und/oder eines oder mehrerer Reflektoren gebildet werden, die dem primären optischen System (4) in der Projektionsrichtung des Lichtbündels nachgelagert angeordnet sind,
**dadurch gekennzeichnet, dass** die Projektionsmittel geeignet sind, ein Lichtbündel ausgehend von den virtuellen Bildern (6) zu projizieren, die als Lichtquellen für die Projektionsmittel dienen, die auf die virtuellen Bilder fokussiert sind
und dadurch, dass eine konvergente Optik jeder primären Lichtquelle (8) nachgelagert angeordnet ist, wobei jede konvergente Optik einen Mikro-Eingangsdiopter (5) mit mindestens einem konvexen Abschnitt umfasst, wobei das primäre optische System (4) einen einzigen Ausgangsdiopter (9) für alle Mikro-Eingangsdiopter (5) umfasst, der dazu ausgestaltet ist, die optischen Aberrationen zu korrigieren, und eine im Wesentlichen kugelige Form hat.

2. Optisches Modul zur Projektion eines Lichtbündels nach Anspruch 1, **dadurch gekennzeichnet, dass** das primäre optische System (4) so ausgebildet ist, dass die virtuellen Bilder (6) der primären Lichtquellen (8) im Wesentlichen benachbart sind, um eine homogene Lichtverteilung zu bilden.

3. Optisches Modul zur Projektion eines Lichtbündels nach einem der vorhergehenden Ansprüche, **dadurch gekennzeichnet, dass** das primäre optische System (4) dazu ausgestaltet ist, die virtuellen Bilder (6) in einer Ebene zu bilden.

4. Optisches Modul zur Projektion eines Lichtbündels nach einem der vorhergehenden Ansprüche, **dadurch gekennzeichnet, dass** das primäre optische System (4) aus einem einzigen Material hergestellt ist.

5. Optisches Modul zur Projektion eines Lichtbündels nach einem der vorhergehenden Ansprüche, **dadurch gekennzeichnet, dass** die primären Lichtquellen (8) Leuchtdioden sind.

6. Kraftfahrzeugscheinwerfer, der ein optisches Modul (1) zur Projektion eines Lichtbündels nach einem der vorhergehenden Ansprüche umfasst.

## Claims

1. Optical light beam projection module, notably for motor vehicle lighting, comprising
an optical light beam projection device comprising, upstream in the direction of propagation of the light rays, a matrix (2) of primary light sources (8) capable of emitting light rays, and downstream, a primary optical system (4) provided with a plurality of convergent optics configured to form virtual images (6) of the primary light sources (8), the virtual images (6) being formed upstream of the matrix (2) of primary sources (8), such that the dimensions of the virtual images (6) are greater than the dimensions of the primary light sources (8)
and projection means, formed by a projection lens (3) or a reflector, or by the association of a plurality of lenses, or a plurality of reflectors, or a combination of one or more lenses and/or one or more reflectors, arranged downstream of the primary optical system (4) in the direction of projection of the light beam,
**characterized in that** the projection means are capable of projecting a light beam from the virtual images (6) serving as light sources to the projection means which are focused on said virtual images
and **in that** a convergent optic is arranged downstream of each primary light source (8), each convergent optic comprising an input micro-dioptre (5) with at least one convex portion, the primary optical system (4) comprising a single output dioptre (9) for all the input micro-dioptres (5), configured to correct the optical aberrations, and having a substantially spherical form.

2. Optical light beam projection module according to Claim 1, **characterized in that** the primary optical system (4) is arranged such that the virtual images (6) of the primary light sources (8) are substantially adjacent to form a uniform light distribution.

3. Optical light beam projection module according to either one of the preceding claims, **characterized in that** the primary optical system (4) is configured to form the virtual images (6) in a plane.

4. Optical light beam projection module according to any one of the preceding claims, **characterized in that** the primary optical system (4) is made of a single material.

5. Optical light beam projection module according to any one of the preceding claims, **characterized in that** the primary light sources (8) are light-emitting diodes.

6. Motor vehicle headlight comprising an optical light beam projection module (1) according to any one of the preceding claims.
